# EUROPÄISCHE PATENTSCHRIFT

(11) **EP 3 948 156 B1**
(45) Veröffentlichungstag und Bekanntmachung des Hinweises auf die Patenterteilung: **24.12.2025**
(21) Anmeldenummer: 20712522.0
(22) Anmeldetag: 17.03.2020
(51) Int. Cl.: G01B 9/02, G01M 11/00, G02B 5/18, B29D 11/00

(54) **MESSVERFAHREN ZUR INTERFEROMETRISCHEN BESTIMMUNG EINER OBERFLÄCHENFORM**
MEASURING METHOD FOR INTERFEROMETRICALLY DETERMINING A SURFACE SHAPE
PROCÉDÉ DE MESURE POUR LA DÉTERMINATION INTERFÉROMÉTRIQUE D'UNE FORME DE SURFACE

(30) Priorität: 26.03.2019 DE 102019204096
(43) Veröffentlichungstag der Anmeldung: 09.02.2022
(73) Patentinhaber: Carl Zeiss SMT GmbH, 73447 Oberkochen (DE)
(72) Erfinder: STIEPAN, Hans Michael, 73431 Aalen (DE); FUCHS, Sebastian, 73433 Aalen (DE); HETZLER, Jochen, 73434 Aalen (DE)
(74) Vertreter: Zeuner Summerer Stütz
(86) Internationale Anmeldenummer: PCT/EP2020/057241
(87) Internationale Veröffentlichungsnummer: WO 2020/193277

(56) Entgegenhaltungen:
- DE-A1- 102017 216 401
- US-A1- 2018 087 891
- US-A1- 2018 106 591
- THOMPSON KEVIN P ET AL: "Validation of the corrective optics on the Hubble Space Telescope 1st Servicing Mission", JOURNAL OF ASTRONOMICAL TELESCOPES, INSTRUMENTS, AND SYSTEMS, SOCIETY OF PHOTO-OPTICAL INSTRUMENTATION ENGINEERS, 1000 20TH ST. BELLINGHAM WA 98225-6705 USA, vol. 2, no. 3, 1 July 2016 (2016-07-01), pages 34001, XP060075107, ISSN: 2329-4124, [retrieved on 20160711], DOI: 10.1117/1.JATIS.2.3.034001
- JIE FENG ET AL: "Design of twin computer-generated hologram for absolute testing of aspheric surfaces", SPIE - INTERNATIONAL SOCIETY FOR OPTICAL ENGINEERING. PROCEEDINGS, vol. 9282, 18 September 2014 (2014-09-18), US, pages 92821M, XP055706073, ISSN: 0277-786X, ISBN: 978-1-5106-3549-4, DOI: 10.1117/12.2068507

## Beschreibung

Die vorliegende Anmeldung beansprucht die Priorität der deutschen Patentanmeldung 10 2019 204 096.9 vom 26. März 2019.

### Hintergrund der Erfindung

Die Erfindung betrifft ein Messverfahren und eine Messanordnung zur interferometrischen Bestimmung einer Form einer optischen Oberfläche eines Testobjekts. Weiterhin betrifft die Erfindung ein Verfahren zum Design von Phasengittern. Als Testobjekt wird beispielsweise ein optisches Element für die Mikrolithographie vermessen. Durch das Bedürfnis nach immer kleineren Strukturen werden in der Mikrolithographie immer höhere Anforderungen an die optischen Eigenschaften von eingesetzten optischen Elementen gestellt. Die optische Oberflächenform dieser optischen Elemente muss daher mit möglichst hoher Genauigkeit bestimmt werden.

Zur hochgenauen interferometrischen Vermessung optischer Oberflächen bis in den Subnanometerbereich sind, beispielsweise aus WO 2016/188620 A2, interferometrische Messanordnungen und Messverfahren bekannt, bei denen ein diffraktives optisches Element aus einer Eingangswelle eine Prüfwelle und eine Referenzwelle erzeugt. Die Wellenfront der Prüfwelle kann durch das diffraktive optische Element derart an eine Solloberfläche des Testobjekts angepasst sein, dass diese an jedem Ort senkrecht auf die Sollform aufträfe und von dieser in sich zurückreflektiert werden würde. Mit Hilfe des durch Überlagerung der reflektierten Prüfwelle und der Referenzwelle gebildeten Interferogramms lassen sich dann Abweichungen von der Sollform des Testobjekts bestimmen.

Ein Problem bei diesen bekannten Messanordnungen und Messverfahren besteht darin, dass durch das diffraktive optische Element Messfehler verursacht werden, wodurch die Messgenauigkeit bei der Bestimmung der Oberflächenform verringert wird.

### Zugrunde liegende Aufgabe

Es ist eine Aufgabe der Erfindung, ein Messverfahren sowie ein Messanordnung der eingangs genannten Art bereitzustellen, womit die vorgenannten Probleme gelöst werden, und insbesondere die Messgenauigkeit bei der Bestimmung der Oberflächenform verbessert wird.

### Erfindungsgemäße Lösung

Die vorgenannte Aufgabe wird erfindungsgemäß mit dem folgenden Messverfahren zur interferometrischen Bestimmung einer Form einer Oberfläche eines Testobjekts gemäß Anspruch 6 gelöst.

Das Messverfahren umfasst ein Anordnen eines ersten diffraktiven optischen Elements im Strahlengang einer Eingangswelle zur Erzeugung einer ersten Prüfwelle mit einer zumindest teilweise an eine Sollform der optischen Oberfläche angepassten Wellenfront, ein Erfassen eines mittels der ersten Prüfwelle nach Wechselwirkung mit der Oberfläche des Testobjekts erzeugten ersten Interferogramms sowie ein Anordnen eines weiteren diffraktiven optischen Elements anstelle des ersten diffraktiven optischen Elements im Strahlengang der Eingangswelle zur Erzeugung einer weiteren Prüfwelle mit einer zumindest teilweise an die Sollform der optischen Oberfläche angepassten Wellenfront, wobei sich das erste diffraktive optische Element und das weitere diffraktive optische Element in der Konfiguration jeweiliger Beugungsstrukturen unterscheiden, und wobei die erste Prüfwelle und die zweite Prüfwelle derart konfiguriert sind, dass diese zu gleichen Punkten auf der Oberfläche des Testobjekts gehören.

Weiterhin umfasst das Messverfahren ein Erfassen eines mittels der weiteren Prüfwelle nach Wechselwirkung mit der Oberfläche des Testobjekts erzeugten weiteren Interferogramms sowie ein Bestimmen der Form der Oberfläche des Testobjekts durch Verrechnen der beiden Interferogramme. Mit anderen Worten werden die beiden Interferogramme nicht simultan, sondern nacheinander erzeugt. Das erste diffraktive optische Element und das zweite diffraktive optische Element unterscheiden sich in ihrer Beugungswirkung, d.h. sie sind nicht identisch konfiguriert.

Die erfindungsgemäße Lösung beruht auf der Erkenntnis, dass Störstrahlung innerhalb der Messanordnung entstehen kann, welche das Interferogramm an einem oder mehreren Störpunkten verfälscht. So kann eine derartige Störstrahlung an bestimmten Orten des diffraktiven optischen Elements erzeugt werden, welche in diesem Text auch Störungsausgangspunkte bezeichnet werden. An einem diffraktiven optischen Element erzeugte Störstrahlung wird nachstehend auch als Störwelle bezeichnet. Dabei können Störwellen erzeugt werden, deren jeweilige Ausbreitungsrichtung mit der Ausbreitungsrichtung der Prüfwelle übereinstimmt und deren jeweilige Wellenfront sich von der Wellenfront der Prüfwelle unterscheidet. Weiterhin können am diffraktiven optischen Element Störwellen erzeugt werden, deren Ausbreitungsrichtung sich zwar von der Ausbreitungsrichtung der Prüfwelle unterscheidet, die jedoch trotzdem, ggf. aufgrund einer weiteren Umlenkung am diffraktiven optischen Element, Störpunkte im Interferogramm erzeugen. Darüber hinaus können Störwellen auch durch direkte Reflexion am diffraktiven optischen Element erzeugt werden. Weiterhin kann Störstrahlung unabhängig vom diffraktiven optischen Element aufgrund von Reflexpfaden in einer der Durchführung des Messverfahrens dienenden Messanordnung entstehen. Derartige Reflexpfade können z.B. durch Doppelreflexionen an Linsen entstehen.

Durch das erfindungsgemäße Anordnen eines weiteren diffraktiven optischen Elements im Strahlengang der Eingangswelle und Erfassen eines damit erzeugten weiteren Interferogramms wird es möglich die durch die Störstrahlung erzeugten Messfehler zumindest weitgehend herauszurechnen und damit die Messgenauigkeit bei der Bestimmung der Oberflächenform zu verbessern.

Gemäß einer weiteren Ausführungsform unterscheiden sich die beiden diffraktiven optischen Elemente zumindest darin, dass Liniendichten jeweiliger, zum gleichen Ort auf dem Testobjekt korrespondierender Beugungsstrukturen zwischen den beiden diffraktiven optischen Elementen um mindestens 10 Linien pro Millimeter voneinander abweichen. Mit anderen Worten ist die Liniendichte jeweiliger, zum gleichen Ort auf dem Testobjekt korrespondierender Beugungsstrukturen des ersten diffraktiven optischen Elements um mindestens 10 Linien pro Millimeter größer oder kleiner als die Liniendichte des weiteren diffraktiven optischen Elements. Gemäß einer weiteren Ausführungsform unterscheiden sich die beiden diffraktiven optischen Elemente zumindest darin, dass Liniendichten jeweiliger, zum gleichen Ort auf dem Testobjekt korrespondierender Beugungsstrukturen zwischen den beiden diffraktiven optischen Elementen um mindestens 100 Linien pro Millimeter voneinander abweichen.

Gemäß einer weiteren Ausführungsform wird das Messverfahren mittels einer Messanordnung ausgeführt, welche eine Strahlungsquelle zum Bereitstellen der Eingangswelle, eine erste Halteeinrichtung zum jeweiligen Halten eines der beiden diffraktiven optischen Elemente sowie eine zweite Halteeinrichtung zum Halten des Testobjekts umfasst, wobei nach der Erfassung des ersten Interferogramms eine Konfiguration der Messanordnung verändert wird und das weitere Interferogramm in der veränderten Konfiguration erfasst wird. Das heißt, das Erfassen der beiden Interferogramme erfolgt in unterschiedlichen Konfigurationen der Messanordnung.

Gemäß einer weiteren Ausführungsform wird bei der Veränderung der Konfiguration der Messanordnung durch Manipulation mindestens einer der Halteeinrichtungen eine veränderte relative Lage zwischen dem betreffenden diffraktiven optischen Element und dem Testobjekt eingestellt. Die Manipulation umfasst eine entsprechende Justage mindestens einer der Halteeinrichtungen, diese Justage kann manuell oder automatisiert ausgeführt werden.

Gemäß einer weiteren Ausführungsform umfasst die Veränderung der relativen Lage eine Veränderung der relativen Kippstellung zwischen dem betreffenden diffraktiven optischen Element und dem Testobjekt. Gemäß einer Ausführungsvariante umfasst die Veränderung der relativen Kippstellung eine Verkippung des betreffenden diffraktiven optischen Elements, insbesondere um eine quer zur Ausbreitungsrichtung angeordnete Kippachse. Gemäß einer weiteren Ausführungsvariante umfasst die Veränderung der relativen Kippstellung eine Verkippung des Testobjekts. Beim Verrechnen der beiden Interferogramme wird gemäß einer Ausführungsform die durch die Verkippung des Testobjekts erfolgende Verformung der Oberfläche des Testobjekts und der damit einhergehenden Veränderung des Strahlengangs in der Messanordnung modelliert. Dies kann mittels Finite-Elemente-Modellierung erfolgen.

Gemäß einer weiteren Ausführungsform umfasst die Veränderung der relativen Lage eine Translationsbewegung zwischen dem betreffenden diffraktiven optischen Element und dem Testobjekt. Insbesondere umfasst die Translationsbewegung eine Verschiebung des Testobjekts, d.h. die zweite Halteeinrichtung wird derart manipuliert, dass das Testobjekt eine Translationsbewegung ausführt.

Gemäß einer weiteren Ausführungsform umfasst die Messanordnung ein Referenzelement zur Reflexion einer aus der Eingangswelle ausgekoppelten Referenzwelle, wobei das Referenzelement bei der Veränderung der Konfiguration der Messanordnung verkippt wird. Das Referenzelement kann ein Spiegel zur Rückreflexion einer am entsprechenden diffraktiven optischen Element aus der Eingangswelle ausgekoppelten Referenzwelle sein. Weiterhin kann das Referenzelement auch ein sogenanntes Fizeauelement sein, welches dazu konfiguriert ist, die Referenzwelle per Reflexion aus der Eingangswelle auszukoppeln. Die jeweilige Referenzwelle wird mit der entsprechenden Prüfwelle zu Erzeugung des entsprechenden Interferogramms überlagert. Die Verkippung erfolgt insbesondere um eine quer zum Strahlengang der Eingangswelle angeordnete Kippachse. In dem Fall, in dem die Referenzwelle am diffraktiven optischen Element aus der Eingangswelle ausgekoppelt wird, erfolgt die Verkippung insbesondere weiterhin um eine Kippachse, die quer zur Ebene, die von der Ausbreitungsrichtung der Eingangswelle und der Ausbreitungsrichtung der Referenzwelle nach deren Auskopplung am diffraktiven optischen Element aufgespannt wird, angeordnet ist.

Gemäß einer weiteren Ausführungsform umfasst die Messanordnung einen Umlenkspiegel zum Umlenken der Eingangswelle vor deren Auftreffen auf das betreffende diffraktive optische Element, wobei bei der Veränderung der Konfiguration der Messanordnung der Umlenkspiegel verkippt wird. Im Fall, in dem die Referenzwelle am diffraktiven optischen Element aus der Eingangswelle ausgekoppelt wird, erfolgt die Verkippung insbesondere um eine Kippachse, die quer zu der Ebene, die von der Ausbreitungsrichtung der Eingangswelle und der Ausbreitungsrichtung der Referenzwelle nach deren Auskopplung am diffraktiven optischen Element aufgespannt wird, angeordnet ist.

Gemäß einer weiteren Ausführungsform wird bei der Veränderung der Konfiguration der Messanordnung eine Wellenlänge der Eingangswelle verändert.

Gemäß einer weiteren Ausführungsform weisen die diffraktiven optischen Elemente jeweils mindestens zwei sich überlagernd angeordnete diffraktive Strukturmuster auf. Dabei kann eines der diffraktiven Strukturmuster zur Erzeugung der Prüfwelle und das andere diffraktive Strukturmuster zur Erzeugung der Referenzwelle ausgebildet sein. Ein derartiges diffraktives optisches Element mit mindestens zwei sich überlagernd angeordneten diffraktiven Strukturmustern kann ein komplex kodiertes Phasengitter umfassen.

Die vorstehend genannte Aufgabe wird weiterhin erfindungsgemäß mit einer Messanordnung zur interferometrischen Bestimmung einer Form einer Oberfläche eines Testobjekts gemäß Anspruch 18 gelöst. Die Messanordnung umfasst eine Strahlungsquelle zum Bereitstellen einer Eingangswelle, eine erste Halteeinrichtung zum Anordnen eines ersten diffraktiven optischen Elements im Strahlengang der Eingangswelle zur Erzeugung einer ersten Prüfwelle, deren Wellenfront zumindest teilweise an eine Sollform der Oberfläche angepasst ist, sowie alternativ zum Anordnen eines weiteren diffraktiven optischen Elements im Strahlengang der Eingangswelle zur Erzeugung einer weiteren Prüfwelle, deren Wellenfront ebenfalls zumindest teilweise an die Sollform der Oberfläche angepasst ist, wobei die erste Prüfwelle und die zweite Prüfwelle derart konfiguriert sind, dass diese zu gleichen Punkten auf der Oberfläche des Testobjekts gehören, eine zweite Halteeinrichtung zum Halten des Testobjekts im Strahlengang der jeweiligen Prüfwelle, sowie eine Auswerteeinrichtung, welche dazu konfiguriert ist, die Form der Oberfläche des Testobjekts durch Verrechnen eines ersten Interferogramms, welches bei der Anordnung des ersten diffraktiven optischen Elements im Strahlengang der Eingangswelle mittels der weiteren Prüfwelle erzeugt wird, mit einem weiteren Interferogramm, welches bei der Anordnung des ersten diffraktiven optischen Elements im Strahlengang der Eingangswelle mittels der weiteren Prüfwelle erzeugt wird, zu bestimmen.

Wie vorstehend beschrieben, wird das weitere Interferogramm bei Anordnung des weiteren diffraktiven optischen Elements im Strahlengang der Eingangswelle erzeugt. Die Anordnung des weiteren diffraktiven optischen Elements im Strahlengang der Eingangswelle erfolgt dabei anstelle des ersten diffraktiven optischen Elements. Die beiden Interferogramme werden mit der von dem jeweiligen diffraktiven optischen Element erzeugten Prüfwelle nach Wechselwirkung mit der Oberfläche des Testobjekts erzeugt. Die jeweilige Prüfwelle weist jeweils eine zumindest teilweise an eine Sollform der optischen Oberfläche angepasste Wellenfront auf.

Die bezüglich der vorstehend aufgeführten Ausführungsformen, Ausführungsbeispiele bzw. Ausführungsvarianten, etc. des erfindungsgemäßen Messverfahrens angegebenen Merkmale können entsprechend auf die erfindungsgemäße Messanordnung übertragen werden. Diese und andere Merkmale der erfindungsgemäßen Ausführungsformen werden in der Figurenbeschreibung und den Ansprüchen erläutert.

Weiterhin wird erfindungsgemäß ein Verfahren zum Design von Phasengittern bereitgestellt, welches ein Erzeugen einer Vielzahl unterschiedlicher Designs eines Phasengitters, welche jeweils zur Erzeugung einer Prüfwelle aus einer auf das Phasengitter eingestrahlten Eingangswelle konfiguriert sind, anhand vorgegebener Randbedingungen umfasst. Weiterhin umfasst das erfindungsgemäße Designverfahren ein Bestimmen von Positionen von Störpunkten für jedes der erzeugten Designs, welche in einem mit dem jeweiligen Design korrespondierenden Interferogramm enthalten sind, wobei das jeweilige Interferogramm mittels der dem jeweiligen Design zugeordneten Prüfwelle in einer Messeinrichtung erzeugbar ist. Weiterhin umfasst das erfindungsgemäße Designverfahren ein Identifizieren von positionsgleichen Störpunkten in den Interferogrammen von jeweils mindestens zwei der erzeugten Designs sowie ein Auswählen einer Kombination von mindestens zwei der erzeugten Designs unter Berücksichtigung der Anzahl positionsgleicher Störpunkte im Vergleich zu anderen Kombinationen. Störpunkte treten aufgrund von Störstrahlung auf, welche am entsprechenden Störpunkt eine dort sich von der Prüfwelle unterscheidende Wellenfront aufweist. Die Positionen von Störpunkten im entsprechenden Interferogramm werden auf Grundlage einer Simulation und/oder experimentell bestimmt.

Insbesondere wird diejenige Kombination von mindestens zwei der erzeugten Designs ausgewählt, deren Anzahl positionsgleicher Störpunkte geringer ist als die bei anderen Kombinationen vorliegende Anzahl positionsgleicher Störpunkte. So kann etwa die Kombination von mindestens zwei der erzeugten Designs derart ausgewählt werden, dass die Anzahl positionsgleicher Störpunkte minimal wird. Mit anderen Worten ist bei dieser Ausführungsform die Anzahl positionsgleicher Störpunkte bei der ausgewählten Kombination geringer als bei allen anderen Kombinationen.

Gemäß einer Ausführungsform wird die Kombination von mindestens zwei der erzeugten Designs derart ausgewählt, dass die Anzahl positionsgleicher Störpunkte einen vorgegebenen Schwellwert unterschreitet.

Gemäß einer weiteren Ausführungsform des Designverfahrens wird mindestens einer der Störpunkte eines der erzeugten Designs durch eine Störwelle erzeugt, welche an einem dem Störpunkt zugeordneten Punkt des Phasengitters neben der Prüfwelle aus der Eingangswelle erzeugt wird, deren Ausbreitungsrichtung mit der Ausbreitungsrichtung der Prüfwelle übereinstimmt und deren Wellenfront sich von der Wellenfront der Prüfwelle unterscheidet. Insbesondere werden alle Störpunkte der erzeugten Designs durch eine jeweilige derartige Störwelle erzeugt. Der dem Störpunkt des Interferogramms zugeordnete Punkt des Phasengitters wird in diesem Text auch als Störungsausgangspunkt bezeichnet.

Unter der Angabe, wonach die Ausbreitungsrichtung der Störwelle mit der Ausbreitungsrichtung der Prüfwelle übereinstimmt, ist zu verstehen, dass sich die Ausbreitungsrichtungen derart geringfügig voneinander unterscheiden, dass die Störwelle bei Verwendung eines mittels des betreffenden Designs gefertigten diffraktiven Elements zur interferometrischen Obeflächenformbestimmung auf die entsprechende mittels der Prüfwelle erzeugte Stelle im Interferogramm auftrifft und damit eine lediglich auf Grundlage dieses Interferogramms beruhende Messung an dieser Stelle verfälscht.

Gemäß einer Ausführungsform des Designverfahrens betreffen die Designs komplex kodierte Phasengitter und weisen jeweils mindestens zwei sich überlagernd angeordnete diffraktive Strukturmuster auf. Unter den unterschiedlichen Designs ist zu verstehen, dass die Designs sich jeweils in der Konfiguration mindestens eines der Strukturmuster voneinander unterscheiden.

Gemäß einer weiteren Ausführungsform des Designverfahrens weist die Störwelle aufgrund einer Interaktion der Eingangswelle mit den diffraktiven Strukturmustern, welche anders geartet ist als bei der Erzeugung der Prüfwelle, die sich von der Wellenfront der Prüfwelle unterscheidende Wellenfront auf. Insbesondere weist die Störwelle eine Phasenverschiebung gegenüber der Prüfwelle auf. Das heißt, die Interaktion der Eingangswelle mit den mindestens zwei sich überlagernd angeordneten diffraktiven Strukturmustern ist bei der Erzeugung der Störwelle anders als bei der Erzeugung der Prüfwelle. Gemäß einer Ausführungsform sind die diffraktiven Strukturmuster bei der Erzeugung der Störwelle mit einer anderen Gewichtung beteiligt als bei der Erzeugung der Prüfwelle, wobei die Gewichtung auch null betragen kann.

So kann beispielsweise im Fall eines Designs mit zwei sich überlagernden Strukturmustern eine Prüfwelle mittels der +1. Beugungsordnung am ersten Strukturmuster erzeugt werden. Eine Störwelle mit gleicher Ausbreitungsrichtung kann dann etwa durch Überlagerung einer mittels der +2. Beugungsordnung am ersten Strukturmuster erzeugten Welle mit einer mittels der -1. Beugungsordnung am zweiten Strukturmuster erzeugten Welle gebildet werden.

Gemäß eines anderen Beispiels kann im Fall eines Designs mit drei sich überlagernden Strukturmustern eine Prüfwelle ebenfalls mittels der +1. Beugungsordnung am ersten Strukturmuster erzeugt werden. Eine Störwelle mit gleicher Ausbreitungsrichtung kann dann etwa durch Überlagerung der mittels der +1. Beugungsordnung am ersten Strukturmuster erzeugten Welle mit einer mittels der -1. Beugungsordnung am zweiten Strukturmuster erzeugten Welle sowie einer mittels der +1. Beugungsordnung am dritten Strukturmuster erzeugten Welle gebildet werden.

Gemäß einer Ausführungsform weist die Störwelle eine Intensität auf, die mindestens 10⁻⁶, insbesondere mindestens 10⁻⁵, mindestens 10⁻⁴, mindestens 10⁻³ oder mindestens 10⁻² der Intensität der Prüfwelle beträgt.

Gemäß einer weiteren Ausführungsform des Designverfahrens wird für jedes der erzeugten Designs ein durch bekannte Fertigungsungenauigkeiten bedingte Wellenfrontfehler der Prüfwelle charakterisierendes Fehlerbudget berechnet und beim Auswählen der Kombination von mindestens zwei der erzeugten Designs werden auch die berechneten Fehlerbudgets der erzeugten Designs berücksichtigt. Die bekannten Fertigungsungenauigkeiten beziehen sich auf die Fertigungsungenauigkeiten eines anhand des betreffenden Designs gefertigten Phasengitters. Insbesondere erfolgt eine Abwägung des Ziels, die Anzahl positionsgleicher Störpunkte zu minimieren, mit dem Ziel, die Fehlerbudgets der ausgewählten Designs möglichst klein zu halten.

Dies kann etwa mittels einer auf einer geeigneten Zielfunktion beruhenden Optimierungsrechnung erfolgen.

Gemäß einer Ausführungsform des erfindungsgemäßen Messverfahrens umfassen die diffraktiven optischen Elemente Phasengitter, deren Designs mittels des Designverfahrens in einer der vorstehend beschriebenen Ausführungsformen bestimmt werden. Insbesondere umfasst das Messverfahren die Schritte des Designverfahrens zum Bestimmen einer Kombination von mindestens zwei Designs von Phasengittern, wobei diese Designs zur Fertigung des ersten diffraktiven optischen Elements sowie des weiteren diffraktiven optischen Elements verwendet werden.

### Kurzbeschreibung der Zeichnungen

Die vorstehenden, sowie weitere vorteilhafte Merkmale der Erfindung werden in der nachfolgenden detaillierten Beschreibung beispielhafter erfindungsgemäßer Ausführungsformen unter Bezugnahme auf die beigefügten schematischen Zeichnungen veranschaulicht. Es zeigt:
Fig. 1 ein erstes Ausführungsbeispiel einer erfindungsgemäßen Messanordnung zur interferometrischen Bestimmung einer Form einer optischen Oberfläche eines Testobjekts mit einer ersten Ausführungsform eines diffraktiven optischen Elements zur Erzeugung einer Prüfwelle und einer Referenzwelle,
Fig. 2 Störpunkteverteilungen von mittels der Messanordnung gemäß Fig. 1 aufgezeichneten Interferogrammen,
Fig. 3 eine weitere Ausführungsform eines diffraktiven optischen Elements zur Verwendung in der Messanordnung gemäß Fig. 1 mit zusätzlichen Kalibrierspiegeln,
Fig. 4 ein weiteres Ausführungsbeispiel einer erfindungsgemäßen Messanordnung zur interferometrischen Bestimmung einer Form einer optischen Oberfläche eines Testobjekts mit einem diffraktiven optischen Element zur Erzeugung einer Prüfwelle, sowie
Fig. 5 ein Flussdiagramm zur Veranschaulichung eines Verfahrens zum Design von Phasengittern für diffraktive optische Elemente zur Verwendung in der Messanordnung gemäß Fig. 1 oder Fig. 4.

### Detaillierte Beschreibung erfindungsgemäßer Ausführungsbeispiele

In den nachstehend beschriebenen Ausführungsbeispielen bzw. Ausführungsformen oder Ausführungsvarianten sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

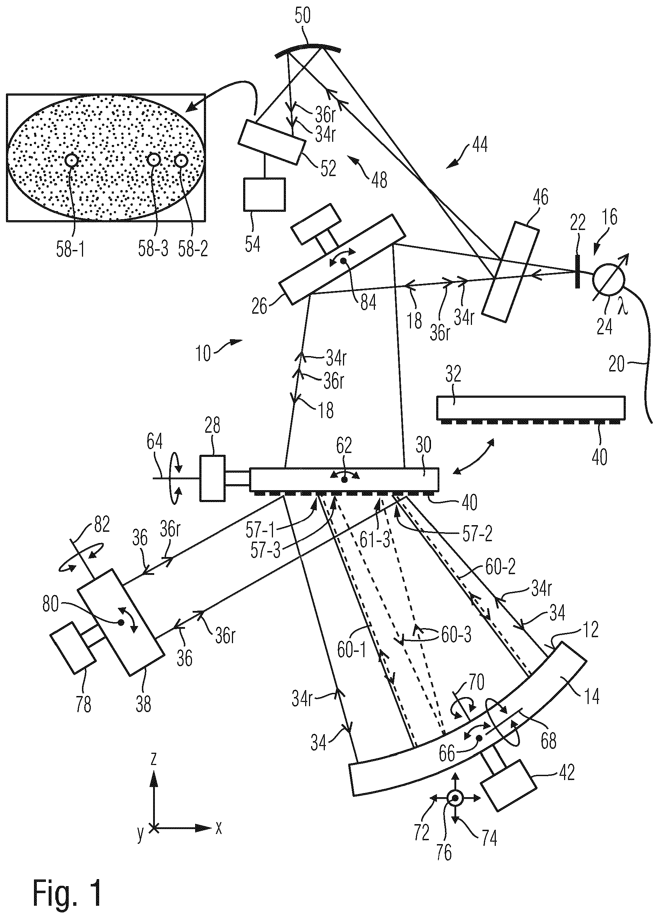

Zur Erleichterung der Beschreibung ist in der Zeichnung ein kartesisches xyz-Koordinatensystem angegeben, aus dem sich die jeweilige Lagebeziehung der in den Figuren dargestellten Komponenten ergibt. In Fig. 1 verläuft die y-Richtung senkrecht zur Zeichenebene in diese hinein, die x-Richtung nach rechts und die z-Richtung nach oben.

In Fig. 1 wird ein Ausführungsbeispiel einer Messanordnung 10 zur interferometrischen Bestimmung der Form einer optischen Oberfläche 12 eines Testobjekts 14 veranschaulicht. Mit der Messanordnung 10 lässt sich insbesondere eine Abweichung der tatsächlichen Form der Oberfläche 12 von einer Sollform bestimmen. Als Testobjekt 14 kann beispielsweise ein Spiegel eines Projektionsobjektivs für die EUV-Mikrolithographie mit einer nicht-sphärischen Oberfläche zur Reflexion von EUV-Strahlung mit einer Wellenlänge von kleiner als 100 nm, insbesondere einer Wellenlänge von etwa 13,5 nm oder etwa 6,8 nm, vorgesehen sein. Die nichtsphärische Oberfläche des Spiegels kann eine Freiformoberfläche mit einer Abweichung von jeder rotationssymmetrischen Asphäre von mehr als 5 µm und einer Abweichung von jeder Sphäre von mindestens 1 mm aufweisen.

Die Messanordnung 10 enthält eine Strahlungsquelle 16 zum Bereitstellen einer ausreichend kohärenten Messstrahlung als Eingangswelle 18. In diesem Ausführungsbeispiel umfasst die Strahlungsquelle 16 einen Wellenleiter 20 mit einer Austrittsfläche 22. Der Wellenleiter 22 ist an ein in Fig. 1 nicht dargestelltes Strahlungserzeugungsmodul, z.B. in Gestalt eines Laser, angeschlossen. Dazu kann beispielsweise ein Helium-Neon-Laser mit einer Wellenlänge von ungefähr 633 nm vorgesehen sein. Die Beleuchtungsstrahlung kann aber auch eine andere Wellenlänge im sichtbaren oder nicht sichtbaren Wellenlängenbereich elektromagnetischer Strahlung aufweisen. In einer Ausführungsform ist die Wellenlänge der Strahlungsquelle 16 veränderbar, was in Fig. 1 mit einem Wellenlängeneinstellregler 24 veranschaulicht ist. Die Strahlungsquelle 16 mit dem Wellenleiter 20 stellt lediglich ein Beispiel einer für die Messanordnung verwendbaren Strahlungsquelle dar. In alternativen Ausführungen kann anstelle des Wellenleiters 20 eine optische Anordnung mit Linsenelementen, Spiegelelementen oder dergleichen zur Bereitstellung einer geeigneten Eingangswelle 18 vorgesehen sein.

Die Messanordnung 10 umfasst weiterhin einen Umlenkspiegel 26 sowie eine erste Halteeinrichtung 28. Der Umlenkspiegel 26 dient zum Umlenken der Eingangswelle 18 auf ein von der ersten Halteeinrichtung 28 gehaltenes diffraktives optisches Element. Dieses ist in der Darstellung gemäß in Fig. 1 ein mit dem Bezugszeichen 30 bezeichnetes erstes diffraktives optisches Element. Dieses kann aus der Halteeinrichtung 28 entfernt und stattdessen ein zweites diffraktives optisches Element 32 oder ein weiteres diffraktives optisches Element in der Halteeinrichtung 28 angeordnet werden.

Das entsprechende, von der Halteeinrichtung 28 gehaltene diffraktive optische Element, in der Darstellung gemäß Fig. 1 das diffraktive optische Element 30, dient zum Erzeugen einer Prüfwelle 34 und einer Referenzwelle 36 aus der Eingangswelle 18. Weiterhin umfasst die Messanordnung 10 ein als reflektives optisches Element ausgebildetes Referenzelement 38 zur Reflexion der Referenzwelle 36 in eine rücklaufende Referenzwelle 36r. Das Referenzelement 38 ist an einer dritten Halteeinrichtung 78 befestigt.

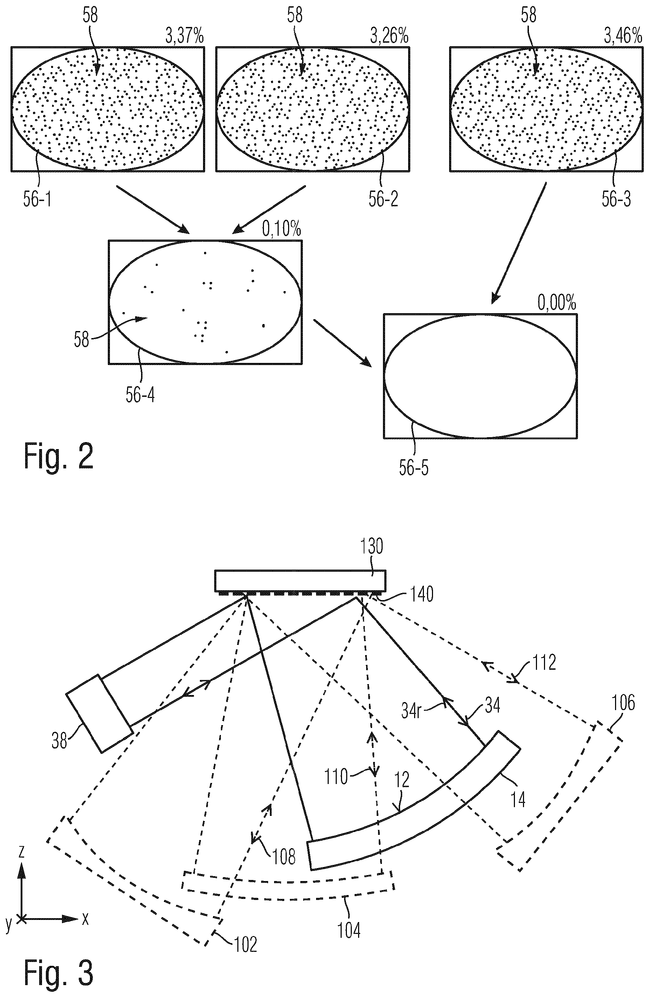

Das diffraktive optische Element 30 ist als komplex kodiertes CGH ausgebildet und enthält Beugungsstrukturen 40, welche gemäß der in Fig. 1 dargestellten Ausführungsform zwei in einer Ebene sich überlagernd angeordnete diffraktive Strukturmuster bilden. Das diffraktive optische Element 30 gemäß Fig. 1 wird daher auch als zweifach komplex kodiertes computer-generiertes Hologramm (CGH) bezeichnet. Alternativ könnten die Beugungsstrukturen auch mehr als zwei in einer Ebene sich überlagernd angeordnete diffraktive Strukturmuster, z.B. fünf sich überlagernd angeordnete diffraktive Strukturmuster wie nachstehend unter Bezugnahme auf Fig. 3 näher erläutert, bilden. Das diffraktive optische Element 130 gemäß Fig. 3 wird daher auch als fünffach komplex kodiertes CGH bezeichnet.

Die beiden diffraktiven Strukturmuster des diffraktiven optischen Elements 30 gemäß Fig. 1 können z.B. durch ein erstes Strukturmuster in Gestalt eines Grundgitters und ein zweites diffraktives Strukturmuster in Gestalt eines Übergitters gebildet werden. Eines der diffraktiven Strukturmuster ist zur Erzeugung der Prüfwelle 34 konfiguriert, welche auf das von einer zweiten Halteeinrichtung 42 gehaltene Testobjekt 14 gerichtet ist und mit einer zumindest teilweise an eine Sollform der optischen Oberfläche 12 angepassten Wellenfront konfiguriert ist. Die Prüfwelle 34 wird an der optischen Oberfläche 12 des Testobjekts 14 reflektiert und läuft als rücklaufende Prüfwelle 34r zum diffraktiven optischen Element 30 zurück. Aufgrund der an die Sollform der optischen Oberfläche 12 angepassten Wellenfront trifft die Prüfwelle 34 an jedem Ort der optischen Oberfläche 12 im Wesentlichen senkrecht auf und wird in sich zurückreflektiert.

Das andere diffraktive Strukturmuster erzeugt die Referenzwelle 36, welche auf das Referenzelement 38 gerichtet ist und eine ebene Wellenfront aufweist. In alternativen Ausführungsbeispielen kann anstelle des komplex kodierten CGHs ein einfach kodiertes CGH mit einer diffraktiven Struktur oder ein anderes optisches Gitter eingesetzt werden. Die Prüfwelle 34 kann dabei beispielsweise in einer ersten Beugungsordnung und die Referenzwelle 36 in nullter oder einer beliebigen anderen Beugungsordnung an der diffraktiven Struktur erzeugt werden. Das Referenzelement 38 ist als ebener Spiegel zur Rückreflexion der Referenzwelle 36 mit ebener Wellenfront ausgebildet. In einer anderen Ausführung kann die Referenzwelle 36 eine sphärische Wellenfront aufweisen und das Referenzelement 38 als sphärischer Spiegel ausgebildet sein.

Die von der Oberfläche 12 rücklaufende Prüfwelle 34r durchläuft das diffraktive optische Element 30 erneut und wird dabei abermals gebeugt. Dabei erfolgt eine Rücktransformation der rücklaufenden Prüfwelle 34r in eine annähernd sphärische Welle, wobei deren Wellenfront durch Abweichungen der Oberfläche 12 des Testobjekts von der Sollform entsprechende Abweichungen von einer sphärischen Wellenfront aufweist. Auch die vom Referenzelement 38 reflektierte rücklaufende Referenzwelle 36r durchläuft das diffraktive optische Element 30 erneut und wird dabei abermals gebeugt. Dabei erfolgt eine Rücktransformation der rücklaufenden Referenzwelle 36r in eine sphärische Welle. In einer alternativen Ausführung mit einem Kollimator im Strahlengang der Eingangswelle 18 zur Erzeugung einer Eingangswelle 18 mit ebener Wellenfront ist keine Anpassung der Wellenfront der Referenzwelle 36r durch das diffraktive optische Element 30 notwendig.

Das diffraktive optische Element 30 dient somit auch zur Überlagerung der rücklaufenden Prüfwelle 34r mit der rücklaufenden Referenzwelle 36r. Ferner enthält die Messanordnung 10 eine Erfassungseinrichtung 44 mit einem Strahlteiler 46 zum Herausführen der Kombination aus der rücklaufenden Prüfwelle 34r und der rücklaufenden Referenzwelle 36r aus dem Strahlengang der Eingangswelle 18 und eine Interferometerkamera 48 zum Erfassen eines durch Überlagerung der Prüfwelle 34r mit der Referenzwelle 36r erzeugten Interferogramms.

Die rücklaufende Prüfwelle 34r und die rücklaufende Referenzwelle 36r treffen als konvergente Strahlen auf den Strahlteiler 46 und werden von diesem in Richtung der Interferometerkamera 48 reflektiert. Beide konvergente Strahlen durchlaufen ein Okular 50 der Interferometerkamera 48 und treffen schließlich auf einen zweidimensional auflösenden Detektor 52 der Interferometerkamera 48. Das Okular 50 ist in der vorliegenden Ausführungsform, in der die Strahlungsquelle 16 mit einem Welleneinstellregler 24 versehen ist, als Spiegel konfiguriert. In alternativen Ausführungsformen, bei denen keine Einstellbarkeit der Wellenlänge vorgesehen ist, kann das Okular auch als Linse konfiguriert sein. Der Detektor 48 kann beispielsweise als CCD-Sensor ausgebildet sein und erfasst ein durch die interferierenden Wellen erzeugtes Interferogramm. Im Fokus der konvergenten Strahlen der Wellen 34r und 36r kann eine in Fig. 1 nicht dargestellte Blende als Raumfilter zur Reduzierung von Streustrahlung angeordnet sein.

Weiterhin umfasst die Messanordnung 10 eine Auswerteeinrichtung 54 zur Bestimmung der tatsächlichen Form der optischen Oberfläche 12 des Testobjekts 14 aus mindestens zwei mittels des Detektors 48 aufgezeichneten Interferogrammen. Dabei wird zunächst ein erstes Interferogramm, welches bei der Anordnung des ersten diffraktiven optischen Elements 30 an der ersten Halteeinrichtung 28 auf dem Detektor 48 erzeugt wird, mit mindestens einem weiteren Interferogramm, welches bei der nachstehend genauer beschriebenen Anordnung des zweiten diffraktiven optischen Elements 32 und ggf. weiterer diffraktiver optischer Elemente an der ersten Halteeinrichtung 28 auf dem Detektor 48 erzeugt wird, miteinander verrechnet. Aus den verrechneten Interferogrammen bestimmt die Auswerteeinrichtung 54 dann die tatsächliche Form der optischen Oberfläche 12. Alternativ oder zusätzlich kann die Messvorrichtung 10 einen Datenspeicher oder eine Schnittstelle zu einem Netzwerk enthalten, um eine Bestimmung der Oberflächenform mittels der gespeicherten bzw. über das Netzwerk übertragenen Interferogramme durch eine externe Auswertungseinheit zu ermöglichen.

Die vom Detektor 48 aufgezeichneten Interferogramme weisen typischerweise Störpunkteverteilungen auf. In Fig. 1 ist beispielhaft eine derartige Störpunkteverteilung 56-1 für das mittels des ersten diffraktiven optischen Elements 30 aufgezeichnete erste Interferogramm dargestellt. Dabei kennzeichnen die schwarz gefärbten punktartigen Regionen Störpunkte 58 im Interferogramm. Störpunkte 58 treten aufgrund von Störstrahlung auf, welche am entsprechenden Störpunkt 58 eine dort sich von der Prüfwelle 34 unterscheidende Wellenfront aufweist.

Dabei kann die für die Störpunkte 58 verantwortliche Störstrahlung am diffraktiven optischen Element 30 erzeugt werden, in welchem Fall die Störstrahlung in diesem Text als Störwelle 60 bezeichnet wird.

Eine erste Kategorie an Störwellen 60 wird in Fig. 1 anhand zweier Störausgangspunkte 57-1 und 57-2 veranschaulicht. Unter den Störausgangspunkten 57-1 und 57-2 sind Positionen auf dem diffraktiven optischen Element 30 zu verstehen, an denen aus der Eingangswelle 18 neben der auf die optische Oberfläche 12 gerichteten Prüfwelle 34 jeweils eine Störwelle 60 (im Beispiel Störwellen 60-1 und 60-2) erzeugt werden, deren jeweilige Ausbreitungsrichtung mit der Ausbreitungsrichtung der Prüfwelle 34 übereinstimmt und deren jeweilige Wellenfront sich von der Wellenfront der Prüfwelle 34 unterscheidet.

An den Störpunkten 58-1 bzw. 58-2, d.h. den Stellen des vom Detektor 48 aufgezeichneten Interferogramms, welche den Störausgangspunkten 57-1 und 57-2 entsprechen, erfolgt anstatt der gewünschten Überlagerung von lediglich Prüfwelle 34r und Referenzwelle 36r eine Überlagerung dreier Wellen, nämlich der Prüfwelle 34r, der Referenzwelle 36r sowie der jeweiligen Störwelle 60-1 bzw. 60-2. Aufgrund des Beitrags der Störwelle 60 zur an der entsprechenden Stelle des Interferogramms gemessenen Intensität wird die Messung an dieser Stelle verfälscht, d.h. die Messung an dieser Stelle ist nicht brauchbar. Daher können die Störpunkte auch als "blinde Stellen" bezeichnet werden. Als nicht brauchbar gilt eine Messung je nach Genauigkeitsanforderung sobald die Intensität der entsprechenden Störwelle 60 mindestens 10⁻⁶, insbesondere mindestens 10⁻⁵, mindestens 10⁻⁴, mindestens 10⁻³ oder mindestens 10⁻² der Intensität der Prüfwelle 34r an der genannten Stelle beträgt.

Eine oder mehrere der Störwellen 60 können gemäß einer Ausführungsform aufgrund einer Interaktion der Eingangswelle 18 mit den diffraktiven Strukturmustern der Beugungsstrukturen 40 an den Störpunkten 58 entstehen, die anders geartet ist als bei der Erzeugung der Prüfwelle 34. Bezugnehmend auf das zweifach komplex kodierte CGH gemäß Fig. 1 kann etwa an einem oder mehreren Störpunkten 58, an denen wie an allen anderen Orten der Beugungsstrukturen 40 die Prüfwelle 34 mittels der +1. Beugungsordnung am ersten Strukturmuster (keine Beugung bzw. 0. Beugungsordnung am zweiten Strukturmuster) erzeugt wird, bei geeigneter Konfiguration der Strukturmuster durch Beugung der Eingangswelle 18 am ersten Strukturmuster in +2. Beugungsordnung und gleichzeitiger Beugung am zweiten Strukturmuster in -1. Beugungsordnung eine Störwelle 60 erzeugt werden. Wie vorstehend erwähnt, weist eine derartige Störwelle die gleiche Ausbreitungsrichtung aber eine andere Wellenfront wie die Prüfwelle 34 auf.

Eine zweite Kategorie an Störwellen 60, d.h. am diffraktiven optischen Element 30 entstehender Störstrahlung, ist in Fig. 1 exemplarisch als eine von einem Störausgangspunkt 57-3 ausgehende Störwelle 60-3 eingezeichnet. Im Gegensatz zu den Störwellen 60-1 und 60-2 weist die Störwelle eine Ausbreitungsrichtung auf, welche sich von der Ausbreitungsrichtung der Prüfwelle 34 im entsprechenden Strahlungspfad unterscheidet. Die Störwelle 60-3 läuft daher nach Reflexion an der optischen Oberfläche 12 des Testobjekts 14 auf einem verkippten Pfad zum diffraktiven optischen Element 30 zurück und trifft damit auf einen sich vom Störausgangspunkt 57-3 unterscheidenden Punkt 61-3 auf das diffraktive optische Element 30 auf. An diesem Punkt, welcher auch Störwellenumlenkpunkt 61-3 bezeichnet wird, wird die Störwelle 60-3 in der Regel anders umgelenkt als dies für die rücklaufende Prüfwelle 34r an diesem Punkt der Fall ist, und zwar so, dass die Störwelle 60-3 im weiteren Verlauf innerhalb des über den Umlenkspiegel 26, den Strahlteiler 46 und das Okular 50 bis hin zum Detektor 52 führenden Strahlengangs bleibt. In der beispielhaften Veranschaulichung gemäß Fig. 1 trifft die Störwelle 60-3 am Ort des Störpunktes 58-3 auf den Detektor 52 auf.

Gemäß einer dritten Kategorie kann am diffraktiven optischen Element 30 entstehende Störstrahlung in Form von Störwellen durch direkte Reflexion der Eingangswelle 18 am diffraktiven optischen Element 30 entstehen. Gemäß einer weiteren Ausführungsvariante kann Störpunkte im Interferogramm erzeugende Störstrahlung auch unabhängig vom diffraktiven optischen Element aufgrund von Reflexpfaden innerhalb der Messanordnung 10 gebildet werden. Derartige Reflexpfade sind insbesondere in Messanordnungen relevant, welche neben Spiegeln auch eine oder mehrere Linsen umfassen, an denen Doppelreflexionen auftreten können.

In der in Fig. 3 veranschaulichten Ausführungsform, in der das diffraktive optische Element 130 als fünffach komplex kodiertes CGH konfiguriert ist, sind eine Vielzahl an Kombinationen von Beugungsordnungen zur Erzeugung von Störwellen 60 denkbar. Gemäß einem Beispiel können Störwellen 60 durch Beugung der Eingangswelle 18 am ersten Strukturmuster in +1. Beugungsordnung und gleichzeitiger Beugung am dritten Strukturmuster in -1. Beugungsordnung sowie am vierten Strukturmuster in +1. Beugungsordnung erzeugt werden (keine Beugung am vierten und fünften Strukturmuster, d.h. in Kurzdarstellung: [1, 0, -1, 1, 0]).

Allgemein kann Störstrahlung, wie vorstehend unter Bezugnahme auf Fig. 1 beschrieben, auch in Form von Störwellen mit sich von der Ausbreitungsrichtung der Prüfwelle 34 unterscheidender Ausbreitungsrichtung, in Form von direkt am diffraktiven optischen Element reflektierten Störwellen oder in Form von Störstrahlung, die aufgrund von Reflexpfaden innerhalb der Messanordnung entsteht, erzeugt werden.

Wie vorstehend erwähnt, werden zur Bestimmung der tatsächlichen Form der optischen Oberfläche 12 des Testobjekts 14 mindestens zwei Interferogramme miteinander verrechnet. Dazu wird nach der vorstehend beschriebenen Aufzeichnung des mittels des ersten diffraktiven optischen Elements 30 erzeugten ersten Interferogramms zunächst das zweite diffraktive optische Element 32 anstelle des ersten diffraktiven optischen Elements 30 im Strahlengang der Eingangswelle 18 angeordnet. Mit anderen Worten wird das erste diffraktive optische Element 30 aus der Halteeinrichtung 28 entfernt und das zweite diffraktive optische Element 32 an der Halteeinrichtung 28 angeordnet.

Das zweite diffraktive optische Element 32 ist dem ersten diffraktiven optischen Element 30 sehr ähnlich, unterscheidet sich aber in gewissem Umfang in der Konfiguration seiner Beugungsstrukturen 40. Die Beugungsstrukturen 40 des zweiten diffraktiven optischen Elements 32 umfassen ebenfalls zwei diffraktive Strukturmuster, wobei das erste Strukturmuster zur Erzeugung der Prüfwelle 34 mit einer zumindest teilweise an die Sollform der optischen Oberfläche 12 angepassten Wellenfront und das zweite diffraktive Strukturmuster zur Erzeugung der Referenzwelle 36 konfiguriert ist. Die vom zweiten diffraktiven optischen Element 32 erzeugte Prüfwelle 34 und Referenzwelle 36 unterscheiden sich von den entsprechenden vom ersten diffraktiven optischen Element 30 erzeugten Wellen 34 und 36 lediglich geringfügig in ihren Ausbreitungsrichtungen. Hierbei werden jeweils die Wellen miteinander verglichen, die zu den gleichen Punkten auf der optischen Oberfläche 12 des Testobjekts 14 bzw. dem Referenzelement 38 gehören. Mit anderen Worten unterscheiden sich die Ausbreitungsrichtungen der Prüfwellen 34 und/oder der Referenzwellen 36 in geringem Maße voneinander, d.h. der entsprechende Abstrahlwinkel der Prüfwelle 34, der Referenzwelle 36 oder beider Wellen 34 und 36 vom entsprechenden diffraktiven optischen Element 30 bzw. 32 unterscheidet sich geringfügig. Gemäß einer Ausführungsform beträgt der Unterschied in den Ausbreitungsrichtungen mindestens 0,3°, insbesondere mindestens 3°. Alternativ oder zusätzlich zur Abstrahlwinkelveränderung bzgl. der Prüfwelle 34 und der Referenzwelle 36 kann die durch das zweite diffraktive optische Element 32 bewirkte Veränderung auch eine Rotation der Prüfwelle 34 um Ihre Ausbreitungsrichtung betreffen.

Aufgrund des veränderten Abstrahlverhaltens des zweiten diffraktiven optischen Elements 32 wird vor der Erfassung des entsprechenden Interferogramms die Konfiguration der Messanordnung 10 an den veränderten Strahlengang angepasst. Dies kann durch eine oder mehrere der nachstehend beschriebenen Konfigurationsveränderungen der Messanordnung 10 erfolgen. Zu diesem Zweck ist die erste Halteeinrichtung 28 dazu konfiguriert, die Kippstellung des diffraktiven optischen Elements 30 bzw. 32 um zwei zueinander orthogonale und quer zur Einstrahlrichtung der Eingangswelle 18 ausgerichtete Kippachsen 62 und 64 zu verändern.

Weiterhin ist die zweite Halteeinrichtung 42 dazu konfiguriert, das Testobjekt 14 in allen sechs Starrkörperfreiheitsgraden zu bewegen, d.h. die Kippstellung des Testobjekts 14 um drei zueinander orthogonale Kippachsen 66, 68 und 70 zu verändern sowie das Testobjekt 14 entlang dreier orthogonal zueinander ausgerichteter Translationsrichtungen 72, 74 und 76 zu verschieben. Weiterhin ist die dritte Halteeinrichtung 78 dazu konfiguriert, die Kippstellung des Referenzelements 38 um zwei zueinander orthogonale und quer zur Einstrahlrichtung der Referenzwelle 36 ausgerichtete Kippachsen 80 und 82 zu verändern. Weiterhin ist der Umlenkspielgel 26 um mindestens eine senkrecht zur Einstrahlrichtung der Eingangswelle 18 ausgerichtete Kippachse 84 verkippbar angeordnet.

Wie vorstehend bereits erwähnt, ist die Strahlungsquelle 16 mit einem Welleneinstellregler 24 versehen. Durch eine Veränderung der Wellenlänge der Eingangswelle 18 können die Abstrahlwinkel der Wellen 34 und 36 vom diffraktiven optischen Element 30 bzw. 32 verändert und damit eine diese Abstrahlwinkel betreffende Abweichung zwischen den diffraktiven optischen Elementen 30 und 32 kompensiert werden. Eine Veränderung der Wellenlänge fällt daher ebenfalls unter die vorstehend erwähnten möglichen Konfigurationsveränderungen der Messanordnung 10.

Die mittels der vorstehend beschriebenen Kipp- und Translationsfreiheitsgrade bewirkbaren Konfigurationsveränderungen umfassen die Einstellung einer veränderten relativen Lage, insbesondere durch Veränderung der relativen Kippstellung und/oder der Vornahme einer Translationsbewegung, zwischen dem diffraktiven optischen Element 30 bzw. 32 und dem Testobjekt 14. Weiterhin können diese Konfigurationsveränderungen eine Verkippung des Referenzelements 38 und/oder des Umlenkspiegels 26 umfassen.

In Fig. 2 ist links oben das bereits in Fig. 1 dargestellte Beispiel einer Störpunkteverteilung 56-1 eines mittels des ersten diffraktiven optischen Elements 30 vom Detektor 48 aufgezeichneten Interferogramms dargestellt. Wie bereits vorstehend angedeutet, sind die darin enthaltenen Störpunkte keine Punkte im mathematischen Sinne, sondern vielmehr punktartige Regionen. Die von den Störpunkten 58 in der Störpunkteverteilung 56-1 kumulativ eingenommene Fläche beträgt im vorliegenden Beispiel 3,37% der Gesamtfläche des Interferogramms, d.h. der Störpunkteanteil ist 3,37%.

Neben der Störpunkteverteilung 56-1 ist in Fig. 2 ein Beispiel einer Störpunkteverteilung 56-2 eines, wie vorstehend beschrieben, mittels des zweiten diffraktiven optischen Elements 32 unter entsprechender Veränderung der Konfiguration der Messanordnung 10 aufgezeichneten zweiten Interfergramms dargestellt. Der Störpunkteanteil des zweiten Interferogramms beträgt im vorliegenden Beispiel 3,26%. Die Störpunkte 58 im zweiten Interferogramm sind jedoch anders verteilt als im ersten Interferogramm, sodass die Kombination der beiden Interferogramme in einer Störpunkteverteilung 56-4 mit einem Störpunkteanteil, d.h. einem Anteil "blinder Stellen", von lediglich 0,10% resultiert.

Weiterhin ist in Fig. 2 der Fall veranschaulicht, in dem noch ein drittes Interferogramm mittels eines dritten diffraktiven optischen Elements, welches sich entsprechend der vorstehend erläuterten Kriterien in gewissem Umfang von den ersten beiden diffraktiven optischen Elementen 30 und 32 unterscheidet, unter entsprechender Veränderung der Konfiguration der Messanordnung 10 aufgezeichnet wird. Die Störpunkteverteilung 56-3 des dritten Interferogramms weist im vorliegenden Beispiel einen Störpunkteanteil von 3,46% auf. Werden nun alle drei Interferogramme kombiniert, so ergibt sich in der daraus resultierenden Störpunkteverteilung 56-5 ein Störpunkteanteil von weniger als 0,01 %.

Durch die vorstehend beschriebene Verrechnung mehrerer Interferogramme zur Bestimmung der tatsächlichen Form der optischen Oberfläche 12 des Testobjekts 14 wird der auf die Störpunkte 58 zurückzuführende Fehlereinfluss auf das Ergebnis der Formbestimmung entsprechend der vorstehend erläuterten Verringerung des Störpunkteanteils in den kombinierten Interferogrammen verringert. Die Genauigkeit der Formbestimmung wird damit entsprechend verbessert.

Wie bereits vorstehend erwähnt, veranschaulicht Fig. 3 ein diffraktives optisches Element 130 in Gestalt eines fünffach komplex kodierten CGH, welches in der Messanordnung 10 gemäß Fig. 1 anstelle des ersten diffraktiven optischen Elements 30 oder in entsprechend der vorstehend erläuterten Kriterien in gewissem Umfang veränderter Form anstelle eines weiteren diffraktiven optischen Elements, wie etwa des zweiten diffraktiven optischen Elements 32, verwendet werden kann. Bei Verwendung des diffraktiven optischen Elements 130 in der Messanordnung 10 gemäß Fig. 1 sind zusätzlich drei Kalibierspiegel 102, 104 und 106 vorgesehen. Zur Kalibrierung des diffraktiven optische Elements 130 bzw. der Messanordnung 10 werden die nacheinander die Kalibrierspiegel 102, 104 und 106 anstatt des Testobjekts 14 angeordnet und vermessen.

Die Beugungsstrukturen 140 des diffraktiven optischen Elements 130 bilden fünf in einer Ebene sich überlagernd angeordnete diffraktive Strukturmuster. Neben der auf die Oberfläche 12 des zu vermessenden Testobjekts 14 gerichteten Prüfwelle 34 und der auf das Referenzelement 38 gerichteten Referenzwelle 36
erzeugen die Beugungsstrukturen 140 drei Kalibrierwellen 108, 110 und 112. Die Kalibrierwellen 108, 110, 112 sind auf jeweils einen der Kalibrierspiegel 102, 104 und 106 gerichtet und in der vorliegenden Ausführungsform sämtlich als sphärische Wellen ausgebildet, deren Wellenfront an die Form des jeweiligen Kalibrierspiegels angepasst ist. In anderen Ausführungsformen können neben oder anstelle sphärischer Wellen auch ebene Wellen als Kalibrierwellen eingesetzt werden.

Mittels des Detektors 52 werden durch Überlagerung der Kalibrierwellen 108, 110, und 112 nach deren jeweiliger Reflexion am entsprechenden Kalibierspiegel 102, 104 und 106 mit der rücklaufenden Referenzwelle 36r erzeugte Kalibrierinterferenzmuster aufgezeichnet. Durch Auswertung der Kalibrierinterferenzmuster können Passe- und/oder Placement-Fehler der Beugungsstrukturen 140 des diffraktiven optischen Elements 130 bestimmt werden und bei der Formbestimmung der optischen Oberfläche 12 durch Auswertung der durch Überlagerung der rücklaufenden Prüfwelle 34r mit der rücklaufenden Referenzwelle 36r erzeugten Interferogramme entsprechend berücksichtigt werden.

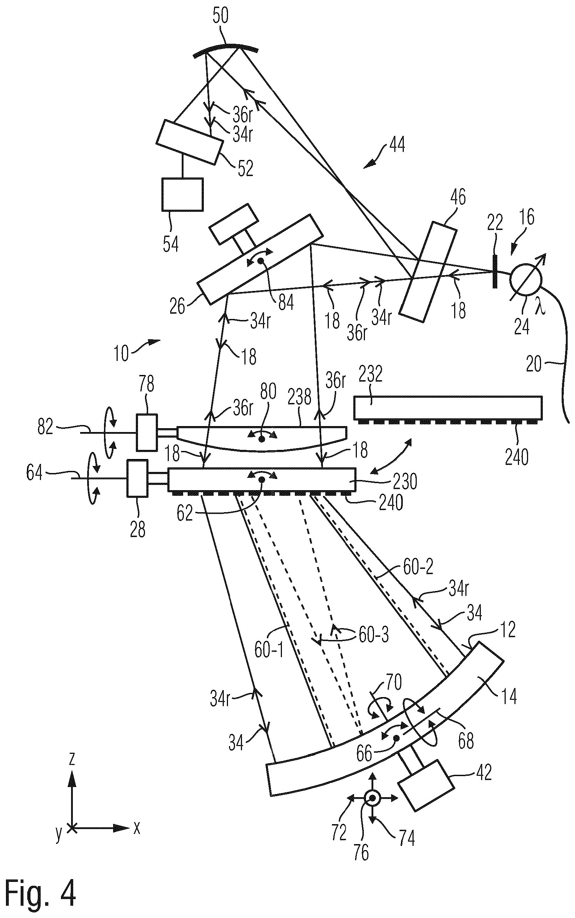

In Fig. 4 ist eine weitere Ausführungsform einer Messanordnung 10 zur interferometrischen Bestimmung der Form einer optischen Oberfläche 12 eines Testobjekts 14 veranschaulicht. Die Messanordnung 10 gemäß Fig. 4 unterscheidet sich dahingehend von der Messanordnung gemäß Fig. 1, dass anstatt des als reflektives optisches Element ausgebildeten Referenzelements 38 ein Referenzelement 238 in Gestalt eines Fizeau-Elements vorgesehen ist und anstelle des diffraktiven optischen Elements 30 bzw. 32 zur Erzeugung sowohl der Referenzwelle 36 als auch der Prüfwelle 34 ein diffraktives optisches Element 230 bzw. 232 mit Beugungsstrukturen 240 zur Erzeugung der Prüfwelle 34 angeordnet ist. Das Fizeau-Element ist im Strahlengang der Eingangswelle 18, d.h. noch vor dem diffraktiven optischen Element 230 bzw. 232 angeordnet und dazu konfiguriert, einen Teil der Strahlung der Eingangswelle 18 als rücklaufende Referenzwelle 36r zur reflektieren. Die Messanordnung 10 gemäß Fig. 4 ist damit als Fizeau-Interferometer konfiguriert.

Das Referenzelement 238 ist an der dritten Halteeinrichtung 78 befestigt und damit um zwei zueinander orthogonale und quer zur Einstrahlrichtung der Eingangswelle 18 ausgerichtete Kippachsen 80 und 82 verkippbar. Diese Kippung muss dann simultan mit einer Verkippung des Umlenkspiegels 26 erfolgen, damit das Licht immer noch senkrecht auf die Fizeaufläche auftrifft. Die Funktionsweise der Messanordnung 10 gemäß Fig. 4 verhält sich analog zur Funktionswiese der Messanordnung 10 gemäß Fig. 1, d.h. die mittels der beiden diffraktiven optischen Elemente 230 und 232 unter Konfigurationsveränderung der Messanordnung 10 aufgezeichneten Interferogramme werden zur Bestimmung der Form der optischen Oberfläche 12 des Testobjekts 14 miteinander verrechnet. Die diffraktiven optischen Elemente 230 und 232 können insbesondere als komplex kodiertes CGH konfiguriert sein und beispielsweise analog zum in Fig. 3 dargestellten diffraktiven optischen Element 130 zur Erzeugung von Kalibrierwellen neben der Prüfwelle 34 ausgebildet sein.

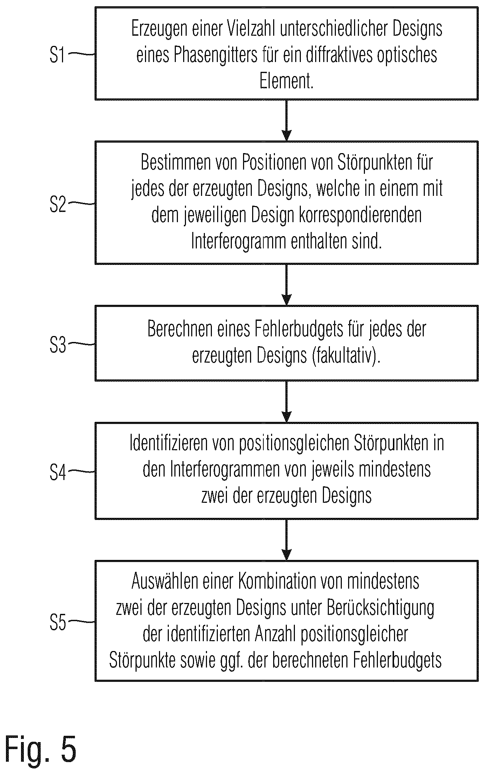

In Fig. 5 ist ein Verfahren zum Design der Phasengitter für die von der Messanordnung 10 gemäß Fig. 1 bzw. Fig. 4 verwendete Kombination der diffraktiven optischen Elemente 30 und 32 bzw. 230 und 232 und ggf. weiterer diffraktiver optischer Elemente anhand eines Flussdiagramms veranschaulicht. Insbesondere handelt es sich dabei um Designs komplex kodierter Phasengitter, die jeweils mindestens zwei sich überlagernd angeordnete diffraktive Strukturmuster aufweisen. In einem ersten Schritt S1 des Designverfahrens wird anhand vorgegebener Randbedingungen in einer Recheneinrichtung eine Vielzahl unterschiedlicher Designs eines Phasengitters für ein diffraktives optisches Element erzeugt. Die erzeugten Phasengitter sind jeweils zur Erzeugung der Prüfwelle 34 gemäß Fig. 1 aus der auf das Phasengitter eingestrahlten Eingangswelle 18 konfiguriert.

In einem zweiten Schritt S2 des Designverfahrens werden für jedes der erzeugten Designs Positionen von Störpunkten 58 erzeugt, welche in einem mit dem jeweiligen Design korrespondierenden Interferogramm enthalten sind, wobei das jeweilige Interferogramm mittels der dem jeweiligen Design zugeordneten Prüfwelle 34 in einer Messanordnung 10 erzeugbar ist.

Im Fall komplex kodierter Phasengitter können die Störpunkte 58, wie vorstehend unter Bezugnahme auf Fig. 1 bzw. Fig. 3 beschrieben, Orten entsprechen, an denen sich an den einzelnen diffraktiven Strukturmustern des Phasengitters in verschiedenen Beugungsordnungen gebeugte Wellen derart überlagern, dass die überlagerte Welle die gleiche Ausbreitungsrichtung aufweist wie die Prüfwelle 34. Mit anderen Worten kann an den Störpunkten 58 entsprechenden Stellen 57 des Phasengitters eine jeweilige Störwelle 60 erzeugt werden, welche aufgrund einer Interaktion der Eingangswelle 18 mit den diffraktiven Strukturmustern, welche anders geartet ist als bei der Erzeugung der Prüfwelle 34, eine sich von der Wellenfront der Prüfwelle 34 unterscheidende Wellenfront aufweist.

In einem fakultativen dritten Schritt S3 des Designverfahrens wird für jedes der erzeugten Designs ein Fehlerbudget berechnet, welches Wellenfrontfehler der Prüfwelle 34 charakterisiert, die durch bekannte Ungenauigkeiten bei der Fertigung eines auf dem jeweiligen Design beruhenden diffraktiven optischen Elements bedingt sind.

In einem vierten Schritt S4 des Designverfahrens werden positionsgleiche Störpunkte in den Interferogrammen von jeweils mindestens zwei der erzeugten Designs identifiziert. In dem darauf folgenden fünften Schritt S5 des Designverfahrens wird eine Kombination von mindestens zwei der erzeugten Designs unter Berücksichtigung der identifizierten Anzahl positionsgleicher Störpunkte ausgewählt. Insbesondere wird diejenige Kombination an Designs ausgewählt, deren Anzahl positionsgleicher Störpunkte geringer ist als die bei anderen Kombinationen vorliegende Anzahl positionsgleicher Störpunkte. So kann etwa die Kombination an Designs derart ausgewählt werden, dass die Anzahl positionsgleicher Störpunkte minimal wird. Gemäß einer Ausführungsform wird diejenige Kombination an Designs ausgewählt, bei der die Anzahl positionsgleicher Störpunkte einen vorgegebenen Schwellwert unterschreitet. Für den Fall, in dem gemäß Schritt S3 Fehlerbudgets berechnet worden sind, können bei der Auswahl der Kombination an Designs auch die berechneten Fehlerbudgets mitberücksichtigt werden.

Die vorstehende Beschreibung beispielhafter Ausführungsbeispiele, Ausführungsformen bzw. Ausführungsvarianten ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen, insoweit sie in den Rahmen der Erfindung gemäß der Definition in den beigefügten Ansprüchen fallen, abgedeckt sein.

### Bezugszeichenliste

- 10: Messanordnung
- 12: optische Oberfläche
- 14: Testobjekt
- 16: Strahlungsquelle
- 18: Eingangswelle
- 20: Wellenleiter
- 22: Austrittsfläche
- 24: Wellenlängeneinstellregler
- 26: Umlenkspiegel
- 28: erste Halteeinrichtung
- 30: erstes diffraktives optisches Element
- 32: zweites diffraktives optisches Element
- 34: Prüfwelle
- 34r: rücklaufende Prüfwelle
- 36: Referenzwelle
- 36r: rücklaufende Referenzwelle
- 38: Referenzelement
- 40: Beugungsstrukturen
- 42: zweite Halteeinrichtung
- 44: Erfassungseinrichtung
- 46: Strahlteiler
- 48: Interferometerkamera
- 50: Okular
- 52: Detektor
- 54: Auswerteeinrichtung
- 56-1: Störpunkteverteilung des ersten Interferogramms
- 56-2: Störpunkteverteilung des zweiten Interferogramms
- 57: Störungsausgangspunkte
- 58: Störpunkte
- 60: Störwelle
- 61-3: Störwellenumlenkpunkt
- 62: erste Kippachse der ersten Halteeinrichtung
- 64: zweite Kippachse der ersten Halteeinrichtung
- 66: erste Kippachse der zweiten Halteeinrichtung
- 68: zweite Kippachse der zweiten Halteeinrichtung
- 70: dritte Kippachse der zweiten Halteeinrichtung
- 72: erste Translationseinrichtung der zweiten Halteeinrichtung
- 74: zweite Translationseinrichtung der zweiten Halteeinrichtung
- 76: dritte Translationseinrichtung der zweiten Halteeinrichtung
- 78: dritte Halteeinrichtung
- 80: erste Kippachse der dritten Halteeinrichtung
- 82: zweite Kippachse der dritten Halteeinrichtung
- 84: Kippachse des Umlenkspiegels
- 102: erster Kalibrierspiegel
- 104: zweiter Kalibrierspiegel
- 106: dritter Kalibrierspiegel
- 108: erste Kalibrierwelle
- 110: zweite Kalibrierwelle
- 112: dritte Kalibrierwelle
- 130: erstes diffraktives Element
- 140: Beugungsstrukturen
- 230: erstes diffraktives optisches Element
- 232: zweites diffraktives optisches Element
- 238: Referenzelement
- 240: Beugungsstrukturen

## Patentansprüche

1. Verfahren zum Design von Phasengittern mit den Schritten:
- Erzeugen, mittels einer Recheneinrichtung, einer Vielzahl unterschiedlicher Designs eines Phasengitters, welche jeweils zur Erzeugung einer Prüfwelle aus einer auf das Phasengitter eingestrahlten Eingangswelle konfiguriert sind, anhand vorgegebener Randbedingungen,
- Bestimmen von Positionen von Störpunkten für jedes der erzeugten Designs, welche in einem mit dem jeweiligen Design korrespondierenden Interferogramm enthalten sind, wobei das jeweilige Interferogramm mittels der dem jeweiligen Design zugeordneten Prüfwelle in einer Messanordnung erzeugbar ist,
- Identifizieren von positionsgleichen Störpunkten in den Interferogrammen von jeweils mindestens zwei der erzeugten Designs, sowie
- Auswählen einer Kombination von mindestens zwei der erzeugten Designs unter Berücksichtigung der identifizierten Anzahl positionsgleicher Störpunkte im Vergleich zu anderen Kombinationen.

2. Verfahren nach Anspruch 1,
wobei mindestens einer der Störpunkte eines der erzeugten Designs durch eine Störwelle erzeugt wird, welche an einem dem Störpunkt zugeordneten Punkt des Phasengitters neben der Prüfwelle aus der Eingangswelle erzeugt wird, deren Ausbreitungsrichtung mit der Ausbreitungsrichtung der Prüfwelle übereinstimmt und deren Wellenfront sich von der Wellenfront der Prüfwelle unterscheidet.

3. Verfahren nach Anspruch 1 oder 2,
wobei die Designs komplex kodierte Phasengitter betreffen und jeweils mindestens zwei sich überlagernd angeordnete diffraktive Strukturmuster aufweisen.

4. Verfahren nach Anspruch 2 oder 3,
wobei die Störwelle aufgrund einer Interaktion der Eingangswelle mit den diffraktiven Strukturmustern, welche anders geartet ist als bei der Erzeugung der Prüfwelle, die sich von der Wellenfront der Prüfwelle unterscheidende Wellenfront aufweist.

5. Verfahren nach einem der vorausgehenden Ansprüche,
wobei für jedes der erzeugten Designs ein durch bekannte Fertigungsungenauigkeiten bedingte Wellenfrontfehler der Prüfwelle charakterisierendes Fehlerbudget berechnet wird und beim Auswählen der Kombination von mindestens zwei der erzeugten Designs auch die berechneten Fehlerbudgets der erzeugten Designs berücksichtigt werden.

6. Messverfahren zur interferometrischen Bestimmung einer Form einer Oberfläche eines Testobjekts mit den Schritten:
- Anordnen eines ersten diffraktiven optischen Elements im Strahlengang einer Eingangswelle zur Erzeugung einer ersten Prüfwelle mit einer zumindest teilweise an eine Sollform der optischen Oberfläche angepassten Wellenfront,
- Erfassen eines mittels der ersten Prüfwelle nach Wechselwirkung mit der Oberfläche des Testobjekts erzeugten ersten Interferogramms,
- Anordnen eines weiteren diffraktiven optischen Elements anstelle des ersten diffraktiven optischen Elements im Strahlengang der Eingangswelle zur Erzeugung einer weiteren Prüfwelle mit einer zumindest teilweise an die Sollform der optischen Oberfläche angepassten Wellenfront, wobei sich das erste diffraktive optische Element und das weitere diffraktive optische Element in der Konfiguration jeweiliger Beugungsstrukturen unterscheiden und wobei die erste Prüfwelle und die weitere Prüfwelle derart konfiguriert sind, dass diese zu gleichen Punkten auf der Oberfläche des Testobjekts gehören,
- Erfassen eines mittels der weiteren Prüfwelle nach Wechselwirkung mit der Oberfläche des Testobjekts erzeugten weiteren Interferogramms, sowie
- Bestimmen der Form der Oberfläche des Testobjekts durch Verrechnen der beiden Interferogramme.

7. Messverfahren nach Anspruch 6,
bei dem sich die beiden diffraktiven optischen Elemente zumindest darin unterscheiden, dass Liniendichten jeweiliger, zum gleichen Ort auf dem Testobjekt korrespondierender Beugungsstrukturen zwischen den beiden diffraktiven optischen Elementen um mindestens 10 Linien pro Millimeter voneinander abweichen.

8. Messverfahren nach Anspruch 7,
bei dem sich die beiden diffraktiven optischen Elemente zumindest darin unterscheiden, dass die Liniendichten jeweiliger, zum gleichen Ort auf dem Testobjekt korrespondierender Beugungsstrukturen zwischen den beiden diffraktiven optischen Elementen um mindestens 100 Linien pro Millimeter voneinander abweichen.

9. Messverfahren nach einem der Ansprüche 6 bis 8,
welches mittels einer Messanordnung ausgeführt wird, die eine Strahlungsquelle zum Bereitstellen der Eingangswelle, eine erste Halteeinrichtung zum jeweiligen Halten eines der beiden diffraktiven optischen Elemente sowie eine zweite Halteeinrichtung zum Halten des Testobjekts umfasst, wobei nach der Erfassung des ersten Interferogramms eine Konfiguration der Messanordnung verändert wird und das weitere Interferogramm in der veränderten Konfiguration erfasst wird.

10. Messverfahren nach Anspruch 9,
bei dem bei der Veränderung der Konfiguration der Messanordnung durch Manipulation mindestens einer der Halteeinrichtungen eine veränderte relative Lage zwischen dem betreffenden diffraktiven optischen Element und dem Testobjekt eingestellt wird.

11. Messverfahren nach Anspruch 10,
bei dem die Veränderung der relativen Lage eine Veränderung der relativen Kippstellung zwischen dem betreffenden diffraktiven optischen Element und dem Testobjekt umfasst.

12. Messvorfahren nach Anspruch 10 oder 11,
bei dem die Veränderung der relativen Lage eine Translationsbewegung zwischen dem betreffenden diffraktiven optischen Element und dem Testobjekt umfasst.

13. Messverfahren nach einem der Ansprüche 9 bis 12,
bei dem die Messanordnung ein Referenzelement zur Reflexion einer aus der Eingangswelle ausgekoppelten Referenzwelle umfasst und bei der Veränderung der Konfiguration der Messanordnung das Referenzelement verkippt wird.

14. Messverfahren nach einem der Ansprüche 9 bis 13,
bei dem die Messanordnung einen Umlenkspiegel zum Umlenken der Eingangswelle vor deren Auftreffen auf das betreffende diffraktive optische Element umfasst und bei der Veränderung der Konfiguration der Messanordnung der Umlenkspiegel verkippt wird.

15. Messverfahren nach einem der Ansprüche 9 bis 14,
bei dem bei der Veränderung der Konfiguration der Messanordnung eine Wellenlänge der Eingangswelle verändert wird.

16. Messverfahren nach einem der Ansprüche 6 bis 15,
bei dem die diffraktiven optischen Elemente jeweils mindestens zwei sich überlagernd angeordnete diffraktive Strukturmuster aufweisen.

17. Messverfahren nach einem der Ansprüche 6 bis 16,
wobei die diffraktiven optischen Elemente Phasengitter umfassen, deren Designs mittels des Verfahrens nach einem der Ansprüche 1 bis 5 bestimmt werden.

18. Messanordnung zur interferometrischen Bestimmung einer Form einer Oberfläche eines Testobjekts mit:
- einer Strahlungsquelle zum Bereitstellen einer Eingangswelle,
- einer ersten Halteeinrichtung zum Anordnen eines ersten diffraktiven optischen Elements der Messanordnung im Strahlengang der Eingangswelle zur Erzeugung einer ersten Prüfwelle, deren Wellenfront zumindest teilweise an eine Sollform der Oberfläche angepasst ist, sowie alternativ zum Anordnen eines weiteren diffraktiven optischen Elements der Messanordnung im Strahlengang der Eingangswelle zur Erzeugung einer weiteren Prüfwelle, deren Wellenfront ebenfalls zumindest teilweise an die Sollform der Oberfläche angepasst ist, wobei die erste Prüfwelle und die weitere Prüfwelle derart konfiguriert sind, dass diese zu gleichen Punkten auf der Oberfläche des Testobjekts gehören,
- einer zweiten Halteeinrichtung zum Halten des Testobjekts im Strahlengang der jeweiligen Prüfwelle, sowie
- einer Auswerteeinrichtung, welche dazu konfiguriert ist, die Form der Oberfläche des Testobjekts durch Verrechnen eines ersten Interferogramms, welches bei der Anordnung des ersten diffraktiven optischen Elements im Strahlengang der Eingangswelle mittels der ersten Prüfwelle erzeugt wird, mit einem weiteren Interferogramm, welches bei der Anordnung des weiteren diffraktiven optischen Elements im Strahlengang der Eingangswelle mittels der weiteren Prüfwelle erzeugt wird, zu bestimmen.

## Claims

1. A method for designing phase gratings, comprising the steps of:
- generating a multiplicity of different designs of a phase grating by means of a computing device, each of which is configured to generate a test wave from an input wave radiated onto the phase grating, on the basis of specified boundary conditions,
- determining positions of disturbance points for each of the generated designs that are contained in an interferogram corresponding to the respective design, wherein the respective interferogram can be generated in a measurement arrangement by means of the test wave assigned to the respective design,
- identifying disturbance points in the same position in the interferograms of in each case at least two of the generated designs, and
- selecting a combination of at least two of the generated designs, taking into account the identified number of disturbance points in the same position in comparison with other combinations.

2. The method as claimed in claim 1 or 2,
wherein at least one of the disturbance points of one of the generated designs is generated by a disturbance wave that is generated at a point of the phase grating assigned to the disturbance point next to the test wave from the input wave, whose propagation direction corresponds to the propagation direction of the test wave and whose wavefront differs from the wavefront of the test wave.

3. The method as claimed in claim 1 or 2,
wherein the designs relate to complex coded phase gratings and each have at least two diffractive structure patterns arranged so as to superpose one another.

4. The method as claimed in claim 2 or 3,
wherein, due to an interaction of the input wave with the diffractive structure patterns, which is of a different type than when generating the test wave, the disturbance wave has the wavefront differing from the wavefront of the test wave.

5. The method as claimed in any of the preceding claims,
wherein an error budget characterizing wavefront errors of the test wave caused by known manufacturing inaccuracies is calculated for each of the generated designs and the calculated error budgets of the generated designs are also taken into account when selecting the combination of at least two of the generated designs.

6. A measurement method for interferometrically determining a shape of a surface of a test object, comprising the steps of:
- arranging a first diffractive optical element in the beam path of an input wave for generating a first test wave having a wavefront that is at least partially adapted to a desired shape of the optical surface,
- capturing a first interferogram generated by means of the first test wave after interaction with the surface of the test object,
- arranging a further diffractive optical element in place of the first diffractive optical element in the beam path of the input wave for generating a further test wave having a wavefront that is at least partially adapted to the desired shape of the optical surface, wherein the first diffractive optical element and the further diffractive optical element differ in the configuration of respective diffraction structures, and wherein the first test wave and the further test wave are configured such that they are associated to the same points on the surface of the test object,
- capturing a further interferogram generated by means of the further test wave after interaction with the surface of the test object, and
- determining the shape of the surface of the test object by way of computationally combining the two interferograms.

7. The measurement method as claimed in claim 6,
in which the two diffractive optical elements differ at least in that line densities of respective diffraction structures corresponding to the same location on the test object between the two diffractive optical elements differ by at least 10 lines per millimeter.

8. The measurement method as claimed in claim 7,
in which the two diffractive optical elements differ at least in that the line densities of respective diffraction structures corresponding to the same location on the test object between the two diffractive optical elements differ by at least 100 lines per millimeter.

9. The measurement method as claimed in any of claims 6 to 8,
which is carried out by means of a measurement arrangement, which comprises a radiation source for providing the input wave, a first holding device for respectively holding one of the two diffractive optical elements and a second holding device for holding the test object, wherein a configuration of the measurement arrangement is changed after capturing of the first interferogram and the further interferogram is captured in the changed configuration.

10. The measurement method as claimed in claim 9,
in which, during the changing of the configuration of the measurement arrangement, a changed relative position between the relevant diffractive optical element and the test object is set by manipulating at least one of the holding devices.

11. The measurement method as claimed in claim 10,
in which the change in the relative position comprises a change in the relative tilt position between the relevant diffractive optical element and the test object.

12. The measurement method as claimed in claim 10 or 11,
in which the change in the relative position comprises a translational movement between the relevant diffractive optical element and the test object.

13. The measurement method as claimed in any of claims 9 to 12,
in which the measurement arrangement comprises a reference element for reflecting a reference wave decoupled from the input wave and the reference element is tilted when the configuration of the measurement arrangement is changed.

14. The measurement method as claimed in any of claims 9 to 13,
in which the measurement arrangement comprises a deflection mirror for deflecting the input wave before it is incident on the relevant diffractive optical element and the deflection mirror is tilted when the configuration of the measurement arrangement is changed.

15. The measurement method as claimed in any of claims 9 to 14,
in which a wavelength of the input wave is changed when the configuration of the measurement arrangement is changed.

16. The measurement method as claimed in any of claims 6 to 15,
in which the diffractive optical elements each have at least two diffractive structure patterns that are arranged so as to superpose one another.

17. The measurement method as claimed in any of claims 16,
wherein the diffractive optical elements comprise phase gratings, the designs of which are determined by means of the method as claimed in claim 1.

18. A measurement arrangement for interferometrically determining a shape of a surface of a test object, having:
- a radiation source for providing an input wave,
- a first holding device for arranging a first diffractive optical element of the measurement arrangement in the beam path of the input wave for generating a first test wave, the wave front of which being at least partially adapted to a target shape of the surface and, alternatively, for arranging a further diffractive optical element of the measurement arrangement in the beam path of the input wave for generating a further test wave the wave front of which also being at least partially adapted to the target shape of the surface of the test object, wherein the first test wave and the further test wave are configured such that they are associated to the same points on the surface of the test object,
- a second holding device for holding the test object in the beam path of the respective test wave, and
- an evaluation device, which is configured to determine the shape of the surface of the test object by computationally combining a first interferogram, which is generated by means or the first test wave when the first diffractive optical element is arranged in the beam path of the input wave, with a further interferogram, which is generated by means of the further test wave when the further diffractive optical element is generated in the beam path of the input wave.

## Revendications

1. Procédé de conception de réseaux de phase comprenant les étapes suivantes :
- le fait, au moyen d'un dispositif de calcul, de générer une pluralité de conceptions différentes d'un réseau de phase, qui sont chacune configurées pour générer une onde de test à partir d'une onde d'entrée projetée sur le réseau de phase, sur la base de conditions limites prédéfinies,
- le fait de déterminer des positions de points de perturbation pour chacune des conceptions générées, qui sont contenus dans un interférogramme correspondant à la conception respective, l'interférogramme respectif étant apte à être généré dans un dispositif de mesure au moyen de l'onde de test associée à la conception respective,
- le fait d'identifier des points de perturbation ayant la même position dans les interférogrammes de respectivement au moins deux des conceptions générées, et
- le fait de sélectionner, par rapport à d'autres combinaisons, une combinaison d'au moins deux des conceptions générées en tenant compte du nombre identifié de points de perturbation ayant la même position.

2. Procédé selon la revendication 1,
dans lequel au moins un des points de perturbation de l'une des conceptions générées est généré par une onde perturbatrice qui est générée à partir de l'onde d'entrée, en un point du réseau de phase associé au point de perturbation à côté de l'onde de test, dont la direction de propagation correspond à la direction de propagation de l'onde de test et dont le front d'onde diffère du front d'onde de l'onde de test.

3. Procédé selon la revendication 1 ou la revendication 2,
dans lequel les conceptions concernent des réseaux de phase à codage complexe et présentent chacune au moins deux modèles de structure diffractive superposés.

4. Procédé selon la revendication 2 ou la revendication 3,
dans lequel l'onde perturbatrice présente un front d'onde différent du front d'onde de l'onde de test en raison d'une interaction de l'onde d'entrée avec les modèles de structure diffractive, qui est différente de celle qui se produit lors de la génération de l'onde de test.

5. Procédé selon l'une des revendications précédentes, dans lequel, pour chacune des conceptions générées, un budget d'erreurs caractérisant les erreurs de front d'onde de l'onde de test dues à des imprécisions de fabrication connues est calculé, et, lors de la sélection de la combinaison d'au moins deux des conceptions générées, les budgets d'erreurs calculés des conceptions générées sont également pris en compte.

6. Procédé de mesure pour la détermination interférométrique d'une forme d'une surface d'un objet testé, comprenant les étapes suivantes :
- disposition d'un premier élément optique diffractif sur le trajet de faisceau d'une onde d'entrée pour générer une première onde de test ayant un front d'onde au moins partiellement adapté à une forme cible de la surface optique,
- détection d'un premier interférogramme généré au moyen de la première onde de test après interaction avec la surface de l'objet testé,
- placement d'un autre élément optique diffractif à la place du premier élément optique diffractif sur le trajet du faisceau de l'onde d'entrée afin de générer une autre onde de test ayant un front d'onde au moins partiellement adapté à la forme cible de la surface optique, le premier élément optique diffractif et l'autre élément optique diffractif se distinguant par la configuration des structures de diffraction respectives, et la première onde de test et l'autre onde de test étant configurées de telle sorte qu'elles appartiennent à des points identiques sur la surface de l'objet testé,
- détection d'un autre interférogramme généré au moyen de l'autre onde de test après interaction avec la surface de l'objet testé, et
- détermination de la forme de la surface de l'objet testé par calcul des deux interférogrammes.

7. Procédé de mesure selon la revendication 6,
dans lequel les deux éléments optiques diffractifs se distinguent au moins par le fait que les densités de lignes des structures de diffraction respectives, correspondant au même emplacement sur l'objet testé, diffèrent d'au moins 10 lignes par millimètre entre les deux éléments optiques diffractifs.

8. Procédé de mesure selon la revendication 7,
dans lequel les deux éléments optiques diffractifs se distinguent au moins par le fait que les densités de lignes des structures de diffraction respectives, correspondant au même emplacement sur l'objet testé, diffèrent d'au moins 100 lignes par millimètre entre les deux éléments optiques diffractifs.

9. Procédé de mesure selon l'une des revendications 6 à 8,
qui est mis en œuvre au moyen d'un dispositif de mesure comprenant une source de rayonnement pour fournir l'onde d'entrée, un premier dispositif de maintien pour maintenir respectivement l'un des deux éléments optiques diffractifs et un deuxième dispositif de maintien pour maintenir l'objet testé, dans lequel, après la détection du premier interférogramme, une configuration du dispositif de mesure est modifiée et l'interférogramme supplémentaire est détecté dans la configuration modifiée.

10. Procédé de mesure selon la revendication 9,
dans lequel, lors de la modification de la configuration du dispositif de mesure par manipulation d'au moins un des dispositifs de maintien, une position relative modifiée est réglée entre l'élément optique diffractif considéré et l'objet testé.

11. Procédé de mesure selon la revendication 10,
dans lequel la modification de la position relative comprend une modification de la position d'inclinaison relative entre l'élément optique diffractif considéré et l'objet testé.

12. Procédé de mesure selon la revendication 10 ou la revendication 11,
dans lequel la modification de la position relative comprend un mouvement de translation entre l'élément optique diffractif considéré et l'objet testé.

13. Procédé de mesure selon l'une des revendications 9 à 12,
dans lequel le dispositif de mesure comprend un élément de référence pour réfléchir une onde de référence découplée de l'onde d'entrée et dans lequel, lors de la modification de la configuration du dispositif de mesure, l'élément de référence est incliné.

14. Procédé de mesure selon l'une des revendications 9 à 13,
dans lequel le dispositif de mesure comprend un miroir de déviation pour dévier l'onde d'entrée avant qu'elle n'atteigne l'élément optique diffractif considéré et dans lequel, lors de la modification de la configuration du dispositif de mesure, le miroir de déviation est incliné.

15. Procédé de mesure selon l'une des revendications 9 à 14,
dans lequel, lors de la modification de la configuration du dispositif de mesure, la longueur d'onde de l'onde d'entrée est modifiée.

16. Procédé de mesure selon l'une des revendications 6 à 15,
dans lequel les éléments optiques diffractifs présentent chacun au moins deux modèles de structures diffractives superposés.

17. Procédé de mesure selon l'une des revendications 6 à 16,
dans lequel les éléments optiques diffractifs comprennent des réseaux de phase dont les conceptions sont déterminées par le procédé selon l'une des revendications 1 à 5.

18. Dispositif de mesure pour la détermination interférométrique d'une forme d'une surface d'un objet testé, comprenant :
- une source de rayonnement pour fournir une onde d'entrée,
- un premier dispositif de maintien pour disposer un premier élément optique diffractif du dispositif de mesure sur le trajet de faisceau de l'onde d'entrée afin de générer une première onde de test dont le front d'onde est au moins partiellement adapté à la forme cible de la surface, ou bien pour disposer un autre élément optique diffractif du dispositif de mesure sur le trajet du faisceau de l'onde d'entrée afin de générer une autre onde de test dont le front d'onde est également au moins partiellement adapté à la forme cible de la surface, la première onde de test et l'autre onde de test étant configurées de telle sorte qu'elles appartiennent à des points identiques sur la surface de l'objet testé,
- un deuxième dispositif de maintien pour maintenir l'objet testé sur le trajet de faisceau de l'onde de test respective, ainsi que
- un dispositif d'évaluation qui est configuré pour déterminer la forme de la surface de l'objet testé en calculant un premier interférogramme, généré par la première onde de test lorsque le premier élément optique diffractif est placé sur le trajet de faisceau de l'onde d'entrée, au moyen d'un autre interférogramme, qui est généré par l'autre onde de test lorsque l'autre élément optique diffractif est placé sur le trajet du faisceau de l'onde d'entrée.
